# FASCICULE DE BREVET EUROPEEN

(11) **EP 3 982 447 B1**
(45) Date de publication et mention de la délivrance du brevet: **29.03.2023**
(21) Numéro de dépôt: 21200429.5
(22) Date de dépôt: 01.10.2021
(51) Int. Cl.: H01M 8/04225, H01M 8/04228, H01M 8/04223, H01M 8/04955, H01M 8/04302, H01M 8/04303

(54) **SYSTÈME DE COMMANDE POUR DÉCHARGER LES CELLULES D'UNE PILE À COMBUSTIBLE**
STEUERUNGSSYSTEM ZUM ENTLADEN DER ZELLEN EINER BRENNSTOFFZELLE
CONTROL SYSTEM FOR DISCHARGING THE CELLS OF A FUEL CELL

(30) Priorité: 06.10.2020 FR 2010205
(43) Date de publication de la demande: 13.04.2022
(73) Titulaire: Commissariat à l'énergie atomique et aux énergies alternatives, 75015 Paris (FR)
(72) Inventeur: MORIN, Benoît, 38054 GRENOBLE Cedex 09 (FR); RANIERI, Marco, 38054 GRENOBLE Cedex 09 (FR)
(74) Mandataire: INNOV-GROUP

(56) Documents cités:
- DE-A1-102013 201 995
- FR-A1- 2 951 583
- US-A1- 2004 101 724

## Description

### Domaine technique de l'invention

La présente invention se rapporte à un système de commande destiné à être connecté aux bornes d'une pile à combustible, pour décharger ses cellules.

### Etat de la technique

Une pile à combustible est constituée d'un empilement de plusieurs cellules connectées en série et/ou parallèle, formant un "stack".

La cellule est un générateur dans lequel la fabrication de l'électricité se fait grâce à l'oxydation sur une électrode (anode) d'un combustible réducteur, par exemple le dihydrogène, couplée à la réduction sur l'autre électrode (cathode) d'un oxydant, tel que le dioxygène de l'air. La réaction d'oxydation de l'hydrogène est accélérée par un catalyseur qui est généralement du platine. Si d'autres combinaisons sont possibles, la pile la plus couramment étudiée et utilisée est la pile dihydrogène-dioxygène ou dihydrogène-air (ceci s'expliquant notamment par l'abondance des ressources en hydrogène sur Terre et la facilité de production du dihydrogène).

Chaque cellule est composée d'une paire de plaques, dites plaques bipolaires, et d'une membrane intercalée entre les deux plaques. Les cellules sont empilées pour former une pile à combustible de la capacité souhaitée.

Le potentiel électrique d'une paire de plaques bipolaires est typiquement compris entre 0,6 V et 1,2 V pour une pile en fonctionnement normal.

Au démarrage de la pile, il est connu que le flux d'hydrogène arrivant sur la cathode est insuffisant pour fournir la tension électrique requise en sortie. En l'absence d'hydrogène à oxyder, un potentiel électrique opposé se produit alors pendant quelques instants, pouvant atteindre -1,2V, accompagné par l'apparition de courants inverses, qui sont alors susceptibles de dégrader certains composants de la pile, notamment ses électrodes.

Un problème similaire est constaté lors de l'arrêt de la pile. Tous les potentiels électriques tendent alors vers 0V, mais il est régulièrement observé que des potentiels résiduels persistent, positifs ou négatifs, sur certaines couches. Ces potentiels résiduels, liés à la présence de gaz qui n'ont pas été complètement évacués, sont susceptibles de dégrader la pile sur le moyen/long terme, par exemple en oxydant le ou les matériaux (par ex. : le support carboné du platine) présents sur la membrane entre deux plaques bipolaires.

Ces problèmes ont été décrits dans le brevet US7927752B2 et résolus dans ce brevet par l'emploi d'un dispositif mécanique pour court-circuiter chaque cellule de la pile de manière indépendante. Une solution à base de composants électroniques est également proposée dans ce document. Cependant, cette dernière présente plusieurs inconvénients listés ci-dessous :
- Elle ne permet pas de garantir la tenue en tension et un bon pilotage des transistors utilisés. Une même tension de commande est appliquée sur les grilles de tous les transistors, alors que certains sont susceptibles de voir une différence de tension qui peut dépasser les 200V.
- Elle ne permet pas de contrôler les courants lors de la décharge de la cellule.
- Elle nécessite des connexions spécifiques pour réaliser les pontages de chaque cellule de la pile, rendant l'architecture plus complexe.

De manière plus générale, la solution proposée dans ce document antérieur n'est pas aboutie et elle ne dispose pas de toutes les fonctionnalités nécessaires pour réaliser une décharge efficace et sûre des cellules d'une pile à combustible.

Les demandes de brevets FR2951583A1**,** US2004/101724A1 et DE102013201995A1 décrivent chacun un dispositif utilisé pour l'extinction d'une pile à combustible.

Le but de l'invention est donc de proposer un système de commande destiné à être connecté sur une pile à combustible pour permettre de décharger les cellules de la pile, ce système étant simple à mettre en oeuvre, facile à installer, apte à remplir toutes les fonctionnalités nécessaires à une décharge efficace des cellules d'une pile à combustible et doté d'une architecture parfaitement dimensionnée.

### Exposé de l'invention

Ce but est atteint par un système de commande, destiné à être adapté sur une pile à combustible, ladite pile à combustible comportant plusieurs cellules connectées en série entre une première borne et une deuxième borne, ledit système comportant :
- Une unité centrale de contrôle comprenant au moins une sortie, et configurée pour appliquer un potentiel électrique de commande sur ladite sortie,
- Une première borne principale de connexion destinée à être connectée à la première borne de la pile à combustible et à un potentiel électrique de référence et une deuxième borne principale de connexion destinée à être connectée à la deuxième borne de la pile à combustible,
- Un dispositif électronique de pontage comportant :
   o M unités de pontage électrique distinctes, avec M supérieur ou égal à 2, chaque unité de pontage étant définie par un rang j, avec j allant de 1 à M, chaque unité de pontage électrique comportant une première borne de connexion et une deuxième borne de connexion pour pouvoir se connecter en parallèle d'au moins une cellule distincte de ladite pile à combustible, et une borne de commande d'entrée,
   o La deuxième borne de connexion de l'unité de pontage électrique de rang j, pour j allant de 1 à M-1, étant connectée à la première borne de connexion de l'unité de pontage électrique de rang j+1,
   o La première borne de connexion de l'unité de pontage électrique de rang 1 étant connectée à la première borne principale de connexion,
   o La deuxième borne de connexion de l'unité de pontage électrique de rang M étant connectée à la deuxième borne principale de connexion,
   o Chaque unité de pontage électrique étant configurée pour commander une connexion ou une déconnexion entre sa première borne de connexion et sa deuxième borne de connexion,
- Un circuit de contrôle comprenant une première borne d'entrée connectée à la sortie de l'unité centrale de contrôle pour recevoir ledit potentiel électrique de commande et une deuxième borne d'entrée connectée à la première borne principale de connexion,
- Le circuit de contrôle comprenant plusieurs bornes de sortie connectées chacune à la borne de commande d'entrée d'une unité de pontage électrique distincte,
- Ledit circuit de contrôle étant configuré pour diviser le potentiel électrique de commande reçu en entrée en plusieurs potentiels électriques de pilotage distincts, chaque potentiel électrique de pilotage généré étant destiné à être appliqué sur une borne de sortie distincte du circuit de contrôle.

Selon une particularité, le circuit de contrôle comporte un pont diviseur de tension, comprenant au moins M résistances connectées en série, définissant entre elles lesdits potentiels électriques de pilotage lorsque le potentiel électrique de commande est appliqué sur la sortie de l'unité centrale de contrôle.

Selon une autre particularité, chaque unité de pontage électrique comporte un transistor pilotable de type normalement fermé.

Selon une autre particularité, chaque unité de pontage électrique comporte un transistor pilotable choisi parmi :
- Un transistor de type MOSFET à canal 'p' à appauvrissement,
- Un transistor de type MOSFET à canal 'n' à enrichissement,
- Un transistor de type MOSFET à canal 'n' à appauvrissement,
- Un transistor de type MOSFET à canal 'p' à enrichissement.

Selon une autre particularité, chaque unité de pontage électrique comporte une résistance de décharge connecté au drain ou à la source de son transistor pilotable.

Selon une autre particularité, chaque unité de pontage électrique comporte une résistance connectée entre la grille et la source de son transistor pilotable.

Selon une autre particularité, le système comporte une résistance de tirage connectée entre le potentiel électrique de référence et à la sortie de l'unité centrale de contrôle ou à la grille du transistor de l'unité de pontage électrique de rang M.

Selon une autre particularité :
- L'unité centrale de contrôle comporte un composant de surveillance (2) de la tension aux bornes de chaque cellule de la pile à combustible,
- Le système comporte deux liaisons électriques de mesure destinées à relier ledit composant de surveillance aux bornes de chaque cellule de la pile à combustible,
- Chaque unité de pontage électrique, destinée à être associée à une cellule de la pile à combustible, est connectée entre lesdites deux liaisons électriques de mesure de la cellule.

Selon une autre particularité, l'unité centrale de contrôle comporte un élément de commande connecté sur une sortie pilotable du composant de surveillance.

Selon une autre particularité, l'élément de commande comporte un premier transistor dont la grille est connectée sur la sortie pilotable du composant de surveillance pour recevoir un signal de contrôle et un deuxième transistor dont la grille est connectée au drain du premier transistor, ce deuxième transistor étant destiné à commander la fourniture du potentiel électrique de commande.

L'invention concerne également une installation électrique comprenant une pile à combustible à plusieurs cellules, ladite installation comportant un système de commande tel que défini ci-dessus, chaque unité de pontage électrique du système étant connectée en parallèle d'au moins une cellule distincte de la pile à combustible.

Selon une particularité, chaque unité de pontage électrique est connectée en parallèle des liaisons de mesure de tension aux bornes de chaque cellule de la pile à combustible.

On verra ci-après que la solution de l'invention permet ainsi de mutualiser le câblage nécessaire aux mesures de tension aux bornes des cellules de la pile avec celui employé pour connecter chaque unité de pontage du système. Le système peut ainsi être agencé sur une simple carte de contrôle et être facilement déporté par rapport à la partie puissance.

### Brève description des figures

D'autres caractéristiques et avantages vont apparaître dans la description détaillée qui suit faite en regard des dessins annexés dans lesquels :
- La figure 1 représente de manière schématique une cellule d'une pile à combustible et illustre son principe de fonctionnement.
- La figure 2 représente de manière schématique une pile à combustible composée d'un empilement de plusieurs cellules telles que celles de la figure 1.
- La figure 3 représente de manière schématique l'architecture du système de commande de l'invention, connecté sur une pile à combustible.
- La figure 4 représente un exemple de réalisation de l'unité centrale de contrôle employée dans le système de l'invention.
- Les figures 5A, 5B et 5C montrent trois exemples de transistors qui peuvent être employés dans chaque unité de pontage électrique du système de l'invention et illustre pour chacun d'eux leur principe de fonctionnement.
- Les figures 6A, 6B et 6C représentent trois variantes de réalisation du système de commande de l'invention.
- La figure 7 illustre une variante de réalisation du système de commande de l'invention, appliquée à l'architecture de la figure 6A.
- La figure 8 représente un exemple d'architecture d'une installation électrique comprenant une pile à combustible et le système de l'invention.

### Description détaillée d'au moins un mode de réalisation

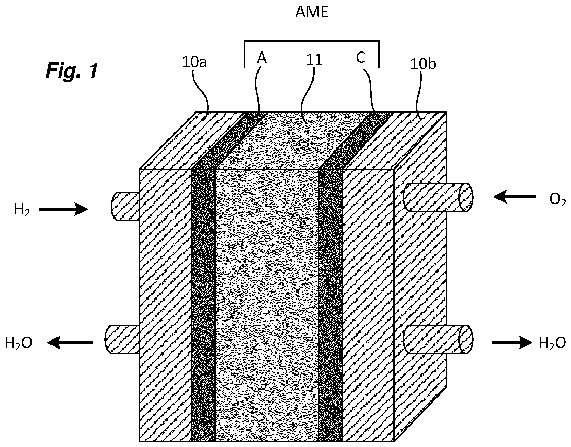

En référence à la figure 1, de manière connue, une cellule employée dans un assemblage en stack d'une pile à combustible comporte classiquement :
- Des plaques bipolaires (non représentées sur la figure 1) : Elles ont pour objectif de permettre l'acheminement des réactifs vers les couches de diffusion (voir ci-dessous). Il est donc nécessaire qu'elles soient imperméables pour éviter toute fuite des gaz vers l'extérieur et vers les compartiments adjacents. Elles doivent également assurer le rôle de collecteur de courant vers le circuit extérieur ou vers la cellule voisine dans le cas d'un empilement de plusieurs cellules (empilement appelé "stack") et permettre l'évacuation de la chaleur générée par la réaction. Enfin, c'est également elles qui assurent le maintien mécanique de la cellule. Elles sont, la plupart du temps, fabriquées en graphite, matériaux composites ou en métal (type acier inoxydable, aluminium, titane ou nickel).
- Les couches de diffusion 10a, 10b : Elles sont appelées GDL en anglais pour "Gas Diffusion Layer". Elles ont plusieurs objectifs à remplir : elles doivent être perméables aux gaz et donc poreuses afin d'amener les réactifs depuis les canaux jusqu'aux électrodes, elles assurent également la conduction des électrons et de la chaleur. Elles sont généralement constituées de fibres sous forme de papier ou alors tissées entre elles.
- L'Assemblage Membrane Électrode (AME), ou MEA en anglais pour "Membrane Electrode Assembly" : Cet assemblage comporte une première couche active appelée l'anode A, qui permet la dissociation de la molécule de dihydrogène H₂ en électrons et en protons. Les électrons générés partent ensuite vers la couche de diffusion 10a tandis que les protons traversent la membrane 11 pour rejoindre l'oxygène O₂ et d'autres électrons venant du circuit extérieur. Ces trois éléments se combinent au niveau de la deuxième couche active, la cathode C, pour former de l'eau H₂O. Ainsi, l'AME a pour rôle de catalyser des réactions chimiques au niveau des électrodes et d'être un bon conducteur ionique au niveau de la membrane. Les principaux matériaux utilisés dans la conception des AME sont tout d'abord les polymères perfluorés sulfonés, tel que le Nafion (marque déposée), qui forment la membrane sur une fine épaisseur allant de 10 à 100 µm d'épaisseur selon les applications. Les électrodes sont composées principalement de Platine pour le catalyseur, de carbone servant comme support pour le catalyseur, et d'un polymère facilitant la percolation protonique au sein de l'électrode.

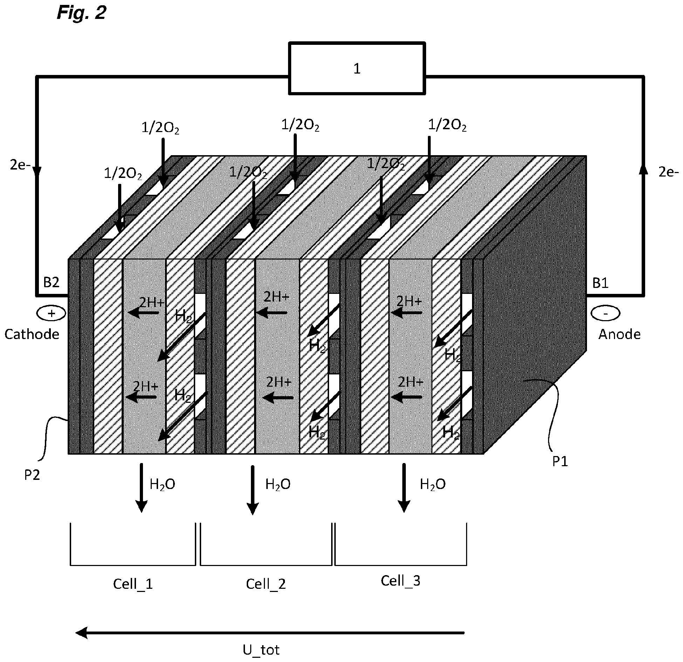

La figure 2 représente un empilement ("stack") de plusieurs cellules telles que celles de la figure 1, entre deux plaques bipolaires P1, P2, formant une pile à combustible, référencée PAC et destinée à l'alimentation d'une charge électrique 1. A titre d'exemple, cette pile est de type PEMFC (pour "Polymer Exchange Membrane Fuel Cells"). Elle fonctionne avec de l'hydrogène et transforme l'énergie chimique, libérée par la réaction entre de l'hydrogène (H₂) et de l'oxygène (O₂), en énergie électrique (électrons e-), formant ainsi des molécules d'eau (H₂O). Les cellules sont connectées en série entre une première borne B1 (son anode) et une deuxième borne B2 (sa cathode). L'empilement peut comporter N cellules, avec N supérieur ou égal à 2. Chaque cellule peut être référencée avec un rang i, avec i allant de 1 à N. Sur la figure 2, la pile à combustible comporte trois cellules Cell_1, Cell_2, Cell_3 connectées en série.

Pour un tel empilement de plusieurs cellules, l'invention vise à pouvoir décharger chaque cellule ou groupe de cellules de l'empilement (créer un "bypass"), notamment au démarrage et à l'arrêt de la pile pour éviter la création de potentiels électriques inverses et limiter la présence de potentiels résiduels.

L'invention se présente sous la forme d'un système de commande destiné à être connecté sur la pile à combustible PAC.

Le système présente notamment l'avantage de pouvoir être intégré directement sur une carte électronique de contrôle, sans modifications majeures, en réutilisant des composants déjà présents pour la surveillance de la pile à combustible PAC.

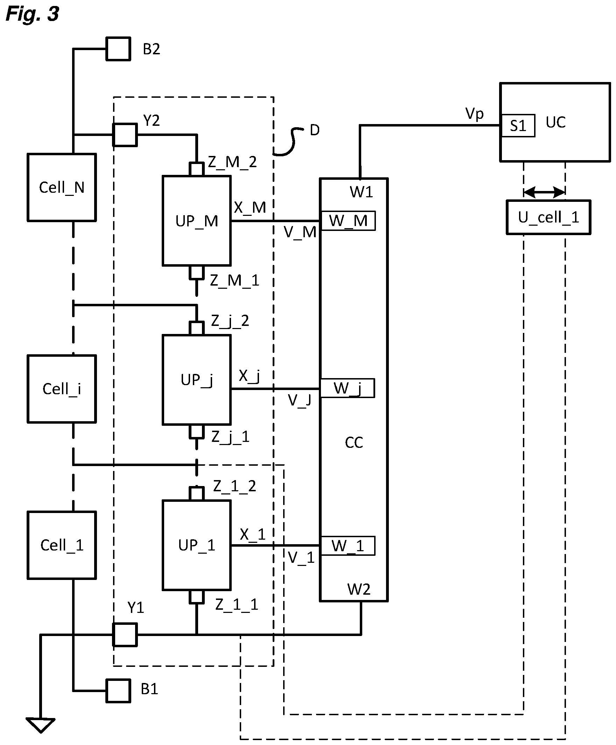

En référence à la figure 3, ce système comporte principalement :
- Une unité centrale de contrôle UC ;
- Un dispositif électronique de pontage D comprenant plusieurs unités de pontage électrique ;
- Un circuit de contrôle CC dudit dispositif électronique de pontage D ;

L'unité centrale de contrôle UC comporte une sortie de commande S1 et est configurée pour fournir un potentiel électrique de commande Vp sur cette sortie S1.

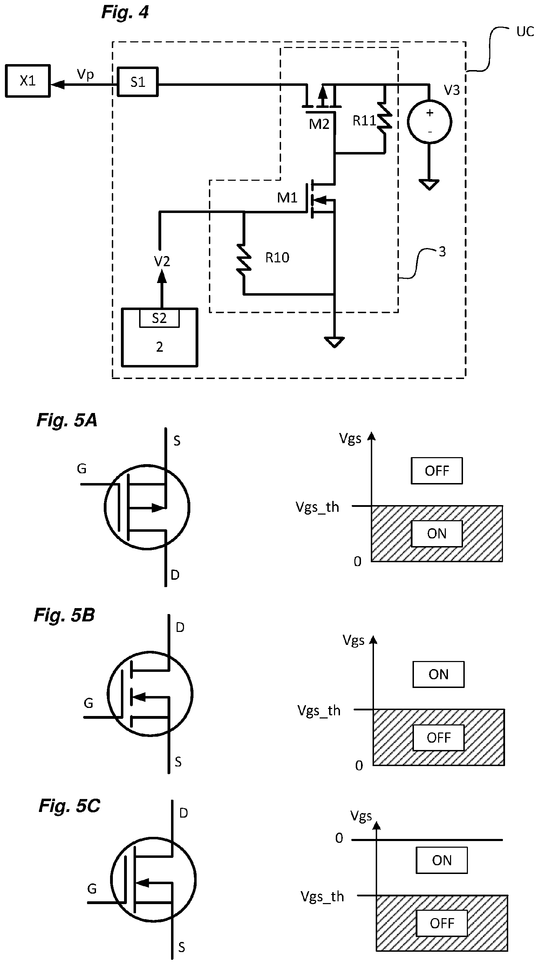

En référence à la figure 4, de manière non limitative, l'unité centrale de contrôle UC peut comporter un composant électronique de surveillance 2 des tensions qui sont présentes aux bornes de chaque cellule Cell_i de la pile à combustible PAC. Ce composant de surveillance 2 peut comporter au moins une sortie S2 pilotable par logiciel. Ce composant 2 peut être destiné à fournir un signal de contrôle V2 en vue de contrôler la sortie de commande S1 de l'unité centrale de contrôle UC.

Ce composant de surveillance 2 peut être celui déjà présent et déjà utilisé pour la surveillance de la pile à combustible PAC, notamment pour récolter les données de mesure de tension aux bornes des cellules de la pile. Pour récolter les mesures de tension, deux liaisons de mesure (fils électriques et/ou pistes électriques...) sont connectées aux bornes de chaque cellule de la pile PAC. Le composant de surveillance 2 comporte ainsi plusieurs entrées de mesure sur lesquelles sont connectées les liaisons de mesure, en vue de mesurer les tensions aux bornes de chaque cellule de la pile.

Selon un aspect particulier de l'invention, le système de l'invention est adapté à la configuration de ce composant de surveillance, notamment au nombre de sorties pilotables disponibles sur ce composant et donc à sa capacité de contrôle.

A titre d'exemple, le composant 2 de surveillance peut être celui référencé LTC6806, fabriqué par "Analog Devices - Linear Technology". Ce composant comporte trente-six entrées de mesure mais ne présente que six sorties pilotables (appelées "GPIO" pour "General Purpose Input Output"), ce qui ne lui permet pas de protéger efficacement une pile à combustible lors de son arrêt/redémarrage, notamment de décharger toutes les cellules d'une pile à combustible lors de cet arrêt/redémarrage. En effet, sans un système adapté, il n'est pas en mesure de piloter trente-six transistors ou contacteurs avec seulement six sorties pilotables.

L'unité centrale de contrôle UC peut comporter une source de tension V3, permettant de fournir le potentiel électrique de commande Vp, sur commande du composant de surveillance 2.

L'unité centrale de contrôle UC peut comporter un élément de commande 3 piloté par le composant de surveillance 2 en vue de commander la fourniture du potentiel électrique de commande Vp fourni par la source de tension V3.

De manière non limitative, l'élément de commande 3 peut être constitué de deux transistors, par exemple :
- Un premier transistor M1 à canal 'n' à enrichissement dont la grille est connectée sur la sortie du composant de surveillance 2 pour recevoir un signal de contrôle V2 et,
- Un deuxième transistor M2 à canal 'p' à enrichissement dont la grille est connectée au drain du premier transistor M1, ce deuxième transistor M2 étant destiné à commander la fourniture du potentiel électrique de commande Vp.

Des résistances R10, R11 sont connectées entre la grille et la source, respectivement des transistors M1 et M2.

L'unité centrale de contrôle UC peut comporter des moyens de traitement intégrés au composant de surveillance 2 ou connectés au composant de surveillance 2 via un bus de communication. Ces moyens de traitement sont destinés à envoyer des ordres au composant de surveillance 2 en vue de piloter l'élément de commande 3 et commander ainsi la fourniture du potentiel électrique de commande Vp.

En référence à la figure 3, le système comporte également :
- Une première borne principale de connexion Y1 destinée à être connectée à la première borne B1 de la pile à combustible PAC et à un potentiel électrique de référence (masse) et une deuxième borne principale de connexion Y2 destinée à être connectée à la deuxième borne B2 de la pile à combustible.

Comme indiqué précédemment, le système comporte un dispositif électronique de pontage D comprenant plusieurs unités de pontage UP_j électrique ou de décharge ("bypass" en anglais). Une unité de pontage UP_j permet de créer un chemin de décharge en parallèle d'au moins une cellule Cell_i de la pile à combustible.

De manière non limitative, une unité de pontage UP_j électrique comporte un transistor pilotable. On verra ci-après que le transistor peut prendre différentes configurations.

Le dispositif électronique de pontage D peut comporter M unités de pontage électrique, avec M supérieur ou égal à 2. Chaque unité de pontage UP_j peut être référencée avec un rang j, avec j allant de 1 à M.

Il faut noter que le nombre M d'unités de pontage UPJ est avantageusement égal au nombre N de cellules, ce qui permet de pouvoir court-circuiter chaque cellule de la pile de manière distincte. Mais il faut comprendre que le nombre M peut être inférieur au nombre N, au moins une unité de pontage électrique étant alors destinée à court-circuiter plusieurs cellules de la pile à combustible.

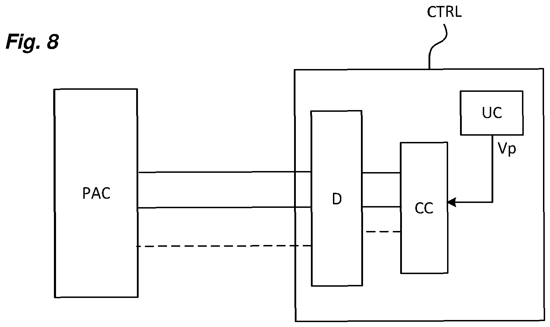

Selon un aspect particulier de l'invention, chaque unité de pontage UP_j peut être directement connectée entre les deux liaisons de mesure de tension : on mutualise ainsi les systèmes déjà existants de connexion de mesure vers la pile, souvent délicats à réaliser du point de vue de l'encombrement et de la tenue mécanique. Les unités de pontage peuvent ainsi être réalisées directement sur la carte de contrôle de la pile à combustible PAC. Cette carte de contrôle de la pile à combustible peut ainsi être facilement déportée par rapport à la pile à combustible et la partie "contrôle" séparée de la partie "puissance". La figure 8 illustre cette architecture.

La figure 3 montre en pointillés, pour la première cellule Cell_1 de la pile, les liaisons de mesure qui permettent la mesure de la tension U_cell_1 aux bornes de cette première cellule et met en évidence la connexion de son unité de pontage UP_1 en parallèle de ces deux liaisons de mesure.

Il faut noter que le principe de mutualisation des liaisons de mesure pour réaliser à la fois les mesures de tension et permettre le câblage des unités de pontage peut nécessiter d'adapter les phases de fonctionnement du système. Il faut notamment alterner les phases de mesure et les phases de décharge (lors du pontage d'une cellule). Le composant de surveillance peut être amené à alterner ses phases dites de "commande" de ses entrées/sorties pendant lesquelles il permet la décharge du courant à travers les unités de pontage et les phases dites "de lecture", c'est-à-dire de mesure des tensions aux bornes de chaque cellule de la pile à combustible. Les phases de lecture seront mises en oeuvre sur une durée très faible (quelques millisecondes), permettant de ne pas perturber les phases de fonctionnement en "bypass" des cellules de la pile à combustible.

Chaque unité de pontage UP_j électrique comporte une borne de commande d'entrée X_j. Elle comporte également une première borne de connexion ZJ_1 et une deuxième borne de connexion ZJ_2 pour venir se connecter en parallèle d'au moins une cellule Cell_i de ladite pile à combustible.

Le dispositif électronique de pontage D est connecté de la manière suivante :
- La deuxième borne de connexion Z_j_2 de l'unité de pontage électrique de rang j, pour j allant de 2 à M-1, est connectée à la première borne de connexion de l'unité de pontage électrique de rang j+1,
- La première borne de connexion Z_1_1 de l'unité de pontage électrique de rang 1 est connectée à la première borne principale de connexion Y1,
- La deuxième borne de connexion Z_M_2 de l'unité de pontage électrique de rang M est connectée à la deuxième borne principale de connexion Y2.

Le système de commande comporte un circuit de contrôle CC du dispositif électronique de pontage D.

Le circuit de contrôle CC comporte une première borne d'entrée W1 connectée à la sortie de commande S1 de l'unité centrale de contrôle UC pour recevoir ledit potentiel électrique de commande Vp et une deuxième borne d'entrée W2 connectée à la première borne principale Y1. Il comporte également plusieurs sorties W_j (avec j allant de 1 à M), connectées chacune à une borne de commande X_j d'une unité de pontage distincte UP_j.

Le circuit de contrôle CC est ainsi configuré pour diviser le potentiel électrique de commande Vp reçu en entrée en plusieurs potentiels électriques de pilotage V_j distincts appliqués chacun sur une borne de sortie distincte.

Pour cela, le circuit de contrôle CC comporte plusieurs unités de contrôle distinctes connectées en cascade, chacune comprenant une sortie W_j dédiée à la commande d'une unité de pontage électrique UP_j distincte, la dernière unité de contrôle de la série recevant en entrée le potentiel électrique de commande Vp en provenance de l'unité centrale de contrôle UC. Les unités de contrôle peuvent ainsi être référencés avec le rang j, avec j allant de 1 à M. L'unité de contrôle de rang j reçoit en entrée un potentiel de commande de l'unité de rang j+1 et est configurée pour fournir un potentiel de pilotage V_j sur sa sortie W_j.

De manière non limitative, le circuit de contrôle CC peut être réalisé sous la forme d'un pont diviseur à plusieurs résistances en série. Pour générer un potentiel électrique de pilotage V_j, pour les unités de contrôle de rang 1 à M-1, chaque unité de contrôle du circuit de contrôle CC comporte ainsi au moins deux résistances en série, formant un pont résistif, le point milieu présent entre les deux résistances en série définissant une sortie W_j particulière du circuit de contrôle CC. Pour l'unité de contrôle de rang M, la dernière résistance du pont diviseur peut être omise, le potentiel électrique de commande Vp étant imposé par l'unité centrale de contrôle UC.

Le circuit de contrôle CC comporte au moins M résistances connectées en série. Les résistances du pont diviseur ont une valeur choisie pour permettre de diviser le potentiel électrique reçu en amont et la génération de chaque potentiel électrique de pilotage V_j adapté à la commande de l'unité de pontage UP_j associée.

En référence aux figures 5A à 5C, chaque unité de pontage électrique UP_j comporte au moins un transistor pilotable.

Le transistor est avantageusement un transistor à effet de champ (FET), avantageusement un transistor de type MOSFET.

Pour rappel, les transistors de type MOSFET se divisent en deux grandes familles selon leur type de canal et en deux modes. Le canal peut être de type 'n' ou de type 'p'. Les modes peuvent être dits à enrichissement ("enhancement" en anglais) ou à appauvrissement ("depletion" en anglais). Le transistor à enrichissement est de type normalement ouvert ("normally OFF"), c'est-à-dire qu'en l'absence d'une tension de pilotage entre sa grille et sa source, il est à l'état ouvert (OFF). Le transistor à appauvrissement est de type normalement fermé ("normally ON"), c'est-à-dire qu'en l'absence d'une tension de pilotage entre sa grille et sa source, il reste à l'état fermé (ON). Le courant qui est contrôlé par l'activation du transistor circule du drain vers la source pour les transistors MOSFET à canal 'n', et il circule de la source vers le drain pour les transistors à canal 'p'. Pour les transistors MOSFET à canal 'n', la diode parasite est orientée de la source vers le drain et pour les transistors à canal 'p', la diode parasite est orientée du drain vers la source.

A titre d'exemple, dans chaque unité de pontage, le transistor peut ainsi être :
- Un transistor de type MOSFET à canal 'p' à appauvrissement, comme représenté sur la figure 5A, ou
- Un transistor de type MOSFET à canal 'n' à enrichissement, comme représenté sur la figure 5B, ou
- Un transistor de type MOSFET à canal 'n' à appauvrissement, comme représenté sur la figure 5C, ou
- Un transistor de type MOSFET à canal 'p' à enrichissement.

En variante de réalisation, il est également possible d'employer un transistor réalisé en nitrure de gallium (GaN) ou en carbure de silicium. Ces transistors présentent plusieurs avantages, parmi lesquels :
- Ils ont une faible résistance à l'état passant, permettant ainsi de laisser passer un courant beaucoup plus élevé qu'un composant en silicium, dans un encombrement équivalent voir même plus limité ;
- Ils peuvent facilement être mis en oeuvre avec une configuration en normalement fermé, ce qui on le verra ci-après, présente un certain avantage pour l'invention.

En référence à la figure 5A, un transistor MOSFET à canal 'p' à appauvrissement est à l'état passant (état ON) quand la tension Vgs entre sa grille et sa source est inférieure au potentiel électrique seuil Vgs_th. Il est à l'état ouvert (état OFF) quand sa tension grille-source Vgs est supérieure audit seuil Vgs_th. Sa particularité est que, contrairement aux transistors à enrichissement, sa tension de seuil Vgs_th est positive et non négative. Il fonctionne donc en normalement fermé ("normally ON"), ce qui signifie que, en l'absence de pilotage, le transistor est à l'état passant et que l'application de la tension Vgs adaptée permet de le commander à l'état ouvert.

A titre d'exemple, il peut s'agir d'un transistor référencé MMBFJ177LT1 vendu par "ON Semiconductor" et qui présente une tension de seuil de conduction de Vgs_th=2,5V.

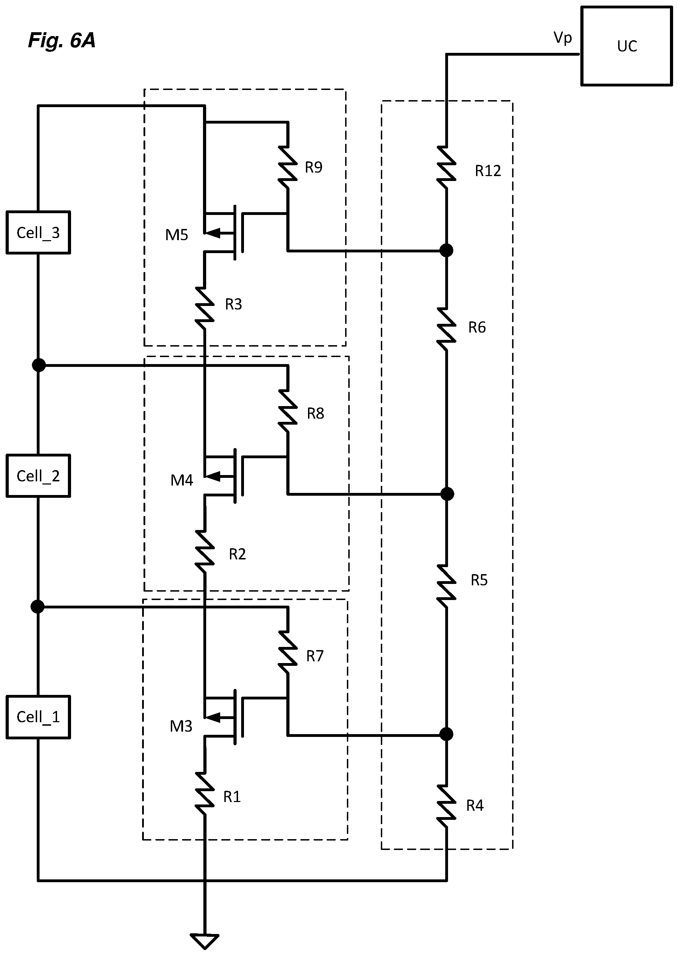

La figure 6A représente le système de l'invention employant, dans chaque unité de pontage électrique, un transistor MOSFET à canal 'p' à appauvrissement. Le système est représenté connecté sur une pile à combustible à trois cellules. Il comporte ainsi trois unités de pontage électrique, chacune dédiée à la décharge d'une cellule distincte de la pile.

Sur ce schéma, on a ainsi :
- M3, M4, M5 : transistors MOSFET à canal 'p' à appauvrissement intégré dans chaque unité de pontage électrique.
- R7, R8, R9 : résistances connectées entre la grille et la source, respectivement de chaque transistor M3, M4, M5.
- R1, R2, R3 : résistances connectées, respectivement pour chaque transistor M3, M4, M5, entre le drain et sa deuxième borne de connexion.
- R4, R5, R6, R12 : résistances du circuit de contrôle formant un pont diviseur de tension à quatre résistances, pour adapter le potentiel électrique de pilotage à chaque transistor commandé ; leurs valeurs doivent être choisies pour répondre à cet objectif.
- CC : Circuit de contrôle tel que décrit ci-dessus.
- UC : Unité de contrôle chargée de fournir le potentiel électrique de commande Vp. Elle peut prendre l'architecture décrite en liaison avec la figure 4.

Partant de cette architecture, son principe de fonctionnement est décrit ci-dessous.

### La pile est en fonctionnement et en régime normal :

- On définit que Vp=5V et que les résistances R4, R5, R6 et R12 ont les valeurs suivantes :
   o R4 = 8,1 kOhms
   o R5=R6=R12 = 1,2 kOhm
- Les transistors M3, M4 et M5 sont de type normalement fermé.
- Sur chaque cellule de la pile à combustible en fonctionnement, une tension est présente, par exemple un maximum de 1,2V (c'est le cas le plus défavorable pour l'électronique). A son électrode de source, le transistor M5 est à un potentiel électrique par rapport à la masse qui est de V=3*1.2=3.6V (car trois cellules en série)
- Le composant de surveillance 2 pilote sa sortie pilotable par logiciel à l'état haut, permettant la commande du transistor M1 à l'état ON, ce qui entraîne également la mise en conduction du transistor M2.
- Le potentiel électrique de commande Vp (par exemple égal à 5V) est donc appliqué sur la sortie de commande de l'unité centrale de contrôle UC, permettant la commande du circuit de contrôle CC.
- A partir du potentiel électrique de commande, le circuit de contrôle CC génère les potentiels électriques de pilotage V_j sur chacune de ses de sortie W_j (j allant de 1 à M). La présence de la résistance R12 et du pont diviseur qui suit, produit une tension grille-source du transistor M5 qui est égale à Vgs_M5 = 4,4 V.
- Le transistor M5 est donc à l'état OFF ce qui ne permet pas de court-circuiter la cellule Cell_3 correspondante, comme souhaité lors du fonctionnement normal de la pile.
- Grâce aux ponts diviseurs, la tension grille-source appliquée sur le transistor de chaque unité de pontage est maintenue supérieure à la valeur seuil Vgs_th, permettant ainsi de le maintenir à l'état OFF.
- Il faut noter que le dimensionnement proposé est adapté au cas où chaque cellule peut fournir une tension de 1.2V. Si chaque cellule fournit une tension inférieure, par exemple 0.6V, la tension grille-source Vgs du transistor de chaque unité de pontage électrique UP_j augmentera de manière automatique, permettant ainsi de le piloter à l'état OFF de manière plus franche.

Il faut noter que le pont diviseur du circuit de contrôle CC est dimensionné pour consommer environ 1mA en fonctionnement, une valeur négligeable par rapport à la puissance de la pile.

Le but du pont diviseur est de bien piloter chaque transistor M3, M4, M5 dans sa zone d'ouverture (OFF) sans appliquer un potentiel électrique de pilotage trop élevé, afin d'éviter toute détérioration des composants.

### A l'arrêt de la pile :

- Le composant de surveillance 2 de l'unité centrale de contrôle UC pilote sa sortie pilotable par logiciel à l'état bas, permettant d'ouvrir les transistors M1 et M2, tirés respectivement par les résistances R10 et R11.
- La tension sur la grille de chaque transistor M3, M4, M5 est donc naturellement portée au potentiel de leur électrode de source, par l'action des résistances R7, R8, R9, entraînant leur mise conduction (état ON).
- Toutes les cellules de la pile à combustible sont ainsi déchargées, supprimant tout potentiel résiduel qui pourrait endommager la membrane ou un autre élément de la pile à combustible.

Il faut noter que, même si le composant de surveillance 2 ne fournit plus de signal sur sa sortie pilotable, et donc qu'aucun potentiel électrique de commande Vp n'est fourni en entrée du circuit de contrôle CC, toutes les cellules se retrouvent tout de même déchargées car l'arrêt de la pile à combustible génère un potentiel électrique qui tend vers 0V à la source de chacun des transistors M3, M4, M5, ce potentiel étant alors suffisant pour passer leur tension grille-source Vgs en dessous de la valeur seuil Vgs_th et donc pour les mettre en conduction.

Cette architecture s'avère donc particulièrement robuste car, en l'absence de contrôle, toutes les cellules de la pile à combustible sont automatiquement déchargées, prévenant ainsi tout risque d'électrocution.

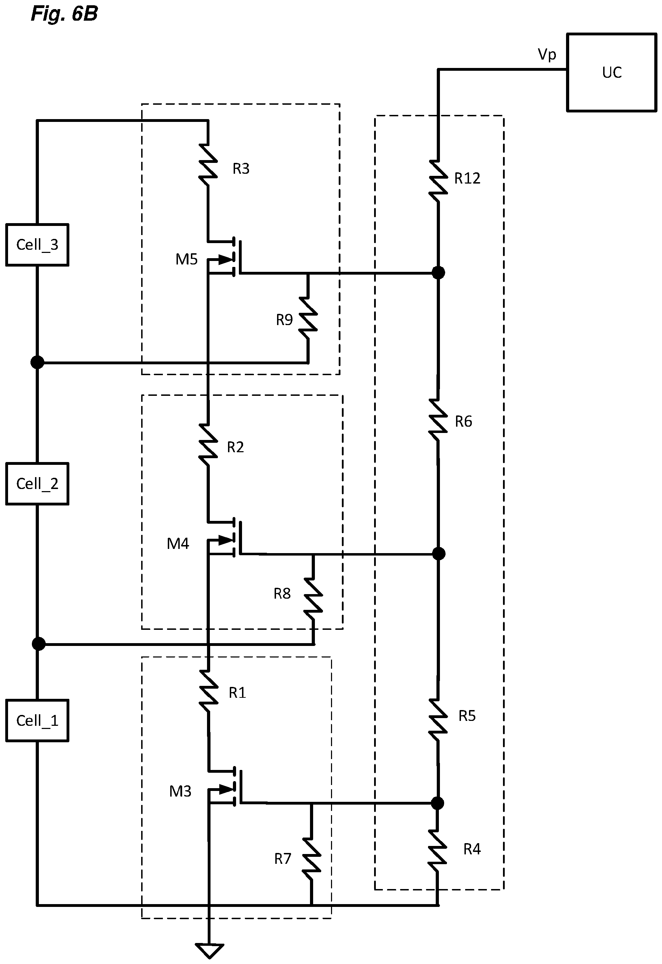

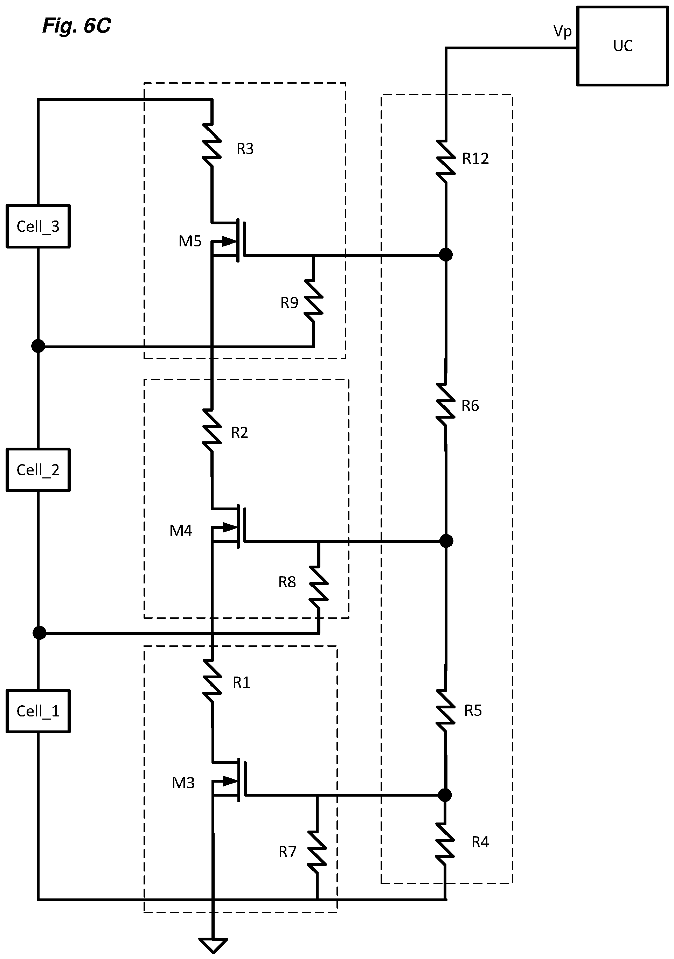

On peut noter que plusieurs éléments limitant le courant, matérialisés par exemple par les résistances R1, R2, R3 sur les figures 6A, 6B et 6C, sont avantageusement introduits pour réguler le courant de décharge lorsque la cellule Cell-i est déchargée. La valeur de ces éléments de limitation doit être dimensionnée au cas par cas, selon la taille de la pile à combustible PAC, le courant qu'il est nécessaire de faire passer lors de la décharge et la durée pendant laquelle ce courant sera amené à circuler, afin de dissiper une puissance raisonnable, respectant la capacité du système à dissiper de la chaleur. A titre d'exemple, les résistances R1, R2, R3 peuvent avoir une valeur de 200mohm. Bien entendu, d'autres solutions de dissipation peuvent être employées, comme par exemple des résistances de type CTP (à Coefficient de Température Positif).

La figure 5B représente un transistor de type MOSFET à canal 'n' à enrichissement.

Le fonctionnement de ce transistor est pratiquement l'inverse de celui décrit ci-dessus, pour le transistor MOSFET à canal 'p' à appauvrissement.

Ce transistor est à l'état ouvert (état OFF) quand la tension Vgs entre sa grille et sa source est inférieure au potentiel électrique seuil Vgs_th. Il est à l'état fermé (état ON) lorsque sa tension grille-source Vgs est supérieur audit seuil Vgs_th. Il fonctionne donc en normalement ouvert ("normally OFF"), ce qui signifie que, en l'absence de pilotage, le transistor est à l'état ouvert et que l'application de la tension Vgs adaptée, supérieure au seuil, permet de le commander à l'état fermé.

La figure 6B représente l'architecture électronique du système intégrant dans ses unités de pontage des transistors de type MOSFET à canal 'n' à enrichissement.

Sur cette figure 6B, les références employées sont identiques à celles utilisées pour la figure 6A.

Dans cette architecture de la figure 6B, la sortie pilotable du composant de contrôle 2 est placée à l'état bas lors du fonctionnement normal de la pile, de manière à piloter les transistors M3, M4, M5 à l'état ouvert (OFF). Lors de l'arrêt de la pile ou lors de son démarrage, cette sortie doit être placée à l'état haut pour porter les transistors M3, M4, M5 à l'état fermé (ON) et ainsi décharger les cellules de la pile à combustible.

En référence à la figure 5C, un transistor MOSFET à canal 'n' à appauvrissement est également de type normalement fermé comme le transistor représenté sur la figure 5A. Il est donc à l'état passant (état ON) quand la tension Vgs entre sa grille et sa source est inférieure au potentiel électrique seuil Vgs_th et il est à l'état ouvert (état OFF) quand sa tension grille-source Vgs est supérieure audit seuil Vgs_th. Sa particularité est que sa tension de seuil Vgs_th est négative.

La figure 6C représente l'architecture du système de commande de l'invention, intégrant des transistors conformes à celui de la figure 5C. Son fonctionnement est similaire à celui décrit pour la figure 6A. Dans cette architecture, l'unité centrale de contrôle UC peut présenter une structure adaptée à la tension de seuil Vgs_th négative des transistors des unités de pontage électrique.

Il faut noter qu'il serait également possible d'employer un transistor de type MOSFET à canal 'p' à enrichissement. Le fonctionnement des unités de pontage serait alors similaire à celui décrit ci-dessus en liaison avec la figure 6B.

Il faut également noter que les résistances R7, R8, R9 décrites ci-dessus pour les différentes architectures peuvent être supprimées et remplacées par une seule résistance R13 de tirage ("Pull Down"). Les résistances R7, R8, R9 ont une borne qui est connectée à la source de leur transistor, et qui, lorsque les transistors ne sont pas pilotés mais que les cellules sont alimentées, se trouve ainsi à une tension non nulle. Cette tension entraîne un cheminement de courant, entre la source de chaque transistor et la masse et donc un potentiel électrique non nul sur les grilles des transistors. Même si ce potentiel électrique reste trop faible pour engendrer la conduction du transistor correspondant, il peut s'avérer avantageux de le supprimer.

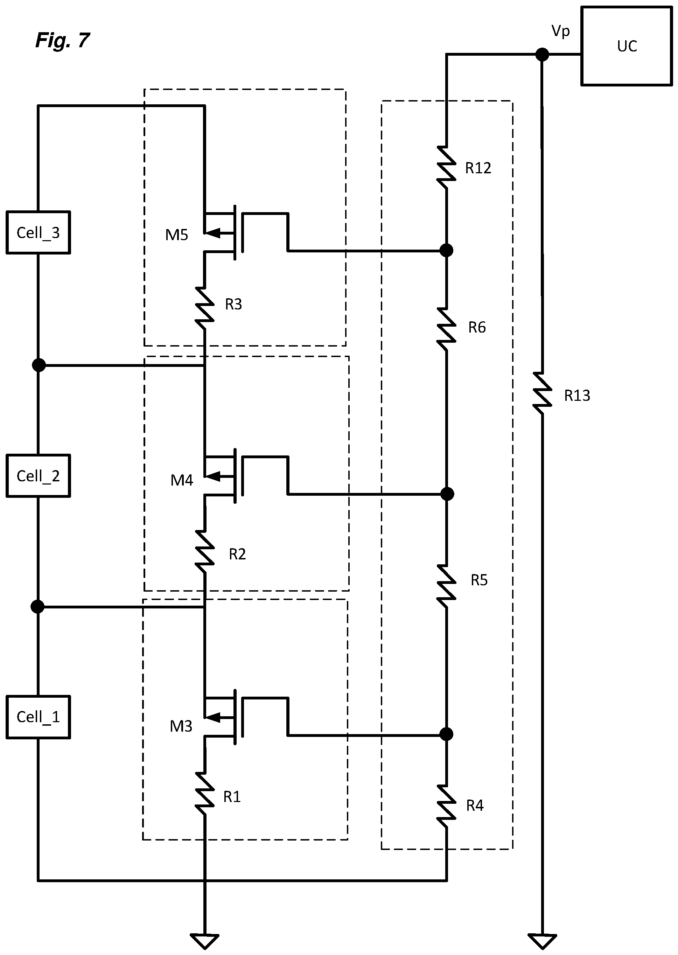

Les résistances ont donc été remplacées par une seule résistance de tirage, référencée R13 sur la figure 7. Elle permet de produire une tension nulle sur toutes les grilles des transistors pilotés, car il n'y a plus aucune connexion vers les sources des transistors. Cette résistance R13 peut être connectée au potentiel électrique de référence et directement sur la sortie S1 de l'unité centrale de contrôle UC ou sur la grille du transistor de l'unité de pontage de rang M. A titre d'exemple, cette résistance R13 peut prendre une valeur supérieure à 10 kOhm.

En référence à la figure 8, le système de commande de l'invention peut ainsi être intégré dans une installation électrique qui comporte une pile à combustible PAC à plusieurs cellules, une partie électronique de contrôle et de surveillance CTRL de la pile, par exemple déportée par rapport à la structure de la pile à combustible. Cette partie de contrôle et de surveillance peut comporter l'unité centrale de contrôle UC, le circuit de contrôle CC et le dispositif électronique de pontage D. Des nappes de fils permettent de relier la pile à combustible à cette partie de contrôle et de surveillance. Ces nappes de fils intègrent les fils de mesure dédiées à la mesure des tensions aux bornes de chaque cellule de la pile à combustible et reliées sur des entrées/sorties du composant de surveillance 2. Il faut noter que cette partie de contrôle et de surveillance CTRL peut elle-même être connectée à une unité centrale, par exemple via un bus de communication, chargée de gérer plusieurs piles à combustible.

Partant des différentes architectures décrites ci-dessus, on peut ainsi lister les avantages ci-dessous :
- La solution de l'invention permet de garantir la tenue en tension des transistors des unités de pontage et leur bon pilotage. Le circuit de contrôle permet d'ajuster le potentiel électrique de pilotage et de commander chaque transistor dans sa zone de conduction ou de blocage, sans le détériorer.
- La solution de l'invention permet de commander chaque transistor dans les deux sens, c'est-à-dire de l'état ON vers l'état OFF et inversement de l'état OFF vers l'état ON. Ceci est permis par la présence des résistances dites de tirage ("pull up") ou dites de rappel ("pull down"), connectées entre la grille et la source de chaque transistor.
- L'emploi de transistors de type normalement fermé permet de sécuriser le fonctionnement du système. En effet, lors de l'arrêt ou du démarrage de la pile, cette configuration permet de s'assurer que toutes les cellules sont déchargées, même en l'absence de commande en provenance de l'unité centrale de contrôle.
- La solution de l'invention permet de mutualiser le câblage nécessaire aux mesures de tension aux bornes des cellules de la pile avec celui employé pour connecter chaque unité de pontage. Le système peut ainsi être agencé sur une simple carte de contrôle et être facilement déporté par rapport à la partie puissance.
- La solution de l'invention permet de contrôler de façon déterministe l'intensité du courant qui passe par chaque unité de pontage lors de son passage à l'état fermé, afin de dissiper une puissance compatible avec la capacité de dissipation thermique du système, la durée des phases d'arrêt/démarrage et l'effectif besoin de décharger une intensité précise de courant. Ceci est permis grâce à l'emploi des résistances de décharge en série avec chaque transistor des unités de pontage.

## Revendications

1. Système de commande, destiné à être adapté sur une pile à combustible (PAC), ladite pile à combustible comportant plusieurs cellules (Cell_i) connectées en série entre une première borne (B1) et une deuxième borne (B2), ledit système comportant :
- Une unité centrale de contrôle (UC) comprenant au moins une sortie (S1), et configurée pour appliquer un potentiel électrique de commande (Vp) sur ladite sortie,
- Une première borne principale de connexion (Y1) destinée à être connectée à la première borne de la pile à combustible et à un potentiel électrique de référence et une deuxième borne principale de connexion (Y2) destinée à être connectée à la deuxième borne de la pile à combustible,
- Un dispositif électronique de pontage (D) comportant :
o M unités de pontage électrique (UP_j) distinctes, avec M supérieur ou égal à 2, chaque unité de pontage étant définie par un rang j, avec j allant de 1 à M, chaque unité de pontage électrique comportant une première borne de connexion (Z_j_1) et une deuxième borne de connexion (Z_j_2) pour pouvoir se connecter en parallèle d'au moins une cellule distincte de ladite pile à combustible, et une borne de commande d'entrée (X_j),
o La deuxième borne de connexion (Zj_2) de l'unité de pontage électrique de rang j, pour j allant de 1 à M-1, étant connectée à la première borne de connexion de l'unité de pontage électrique de rang j+1,
o La première borne de connexion (Z_1_1) de l'unité de pontage électrique de rang 1 étant connectée à la première borne principale de connexion (Y1),
o La deuxième borne de connexion (Z_M_2) de l'unité de pontage électrique de rang M étant connectée à la deuxième borne principale de connexion (Y2),
o Chaque unité de pontage électrique étant configurée pour commander une connexion ou une déconnexion entre sa première borne de connexion et sa deuxième borne de connexion,
- **Caractérisé en ce que** :
- Le système comporte un circuit de contrôle (CC) comprenant une première borne d'entrée (W1) connectée à la sortie (S1) de l'unité centrale de contrôle (UC) pour recevoir ledit potentiel électrique de commande (Vp) et une deuxième borne d'entrée (W2) connectée à la première borne principale de connexion (Y1),
- Le circuit de contrôle (CC) comprenant plusieurs bornes de sortie (W_j) connectées chacune à la borne de commande d'entrée (X_j) d'une unité de pontage électrique distincte,
- Ledit circuit de contrôle (CC) étant configuré pour diviser le potentiel électrique de commande (Vp) reçu en entrée en plusieurs potentiels électriques de pilotage (V_j) distincts, chaque potentiel électrique de pilotage (V_j) généré étant destiné à être appliqué sur une borne de sortie (W_j) distincte du circuit de contrôle (CC).

2. Système selon la revendication 1, **caractérisé en ce que** le circuit de contrôle (CC) comporte un pont diviseur de tension, comprenant au moins M résistances connectées en série, définissant entre elles lesdits potentiels électriques de pilotage (V_j) lorsque le potentiel électrique de commande (Vp) est appliqué sur la sortie (S1) de l'unité centrale de contrôle (UC).

3. Système selon la revendication 1 ou 2, **caractérisé en ce que** chaque unité de pontage électrique (UP_j) comporte un transistor pilotable de type normalement fermé.

4. Système selon la revendication 1 ou 2, **caractérisé en ce que** chaque unité de pontage électrique (UP_j) comporte un transistor pilotable choisi parmi :
- Un transistor de type MOSFET à canal 'p' à appauvrissement,
- Un transistor de type MOSFET à canal 'n' à enrichissement,
- Un transistor de type MOSFET à canal 'n' à appauvrissement,
- Un transistor de type MOSFET à canal 'p' à enrichissement.

5. Système selon la revendication 3 ou 4, **caractérisé en ce que** chaque unité de pontage électrique (UP_j) comporte une résistance de décharge connecté au drain ou à la source de son transistor pilotable.

6. Système selon l'une des revendications 3 à 5, **caractérisé en ce que** chaque unité de pontage électrique comporte une résistance connectée entre la grille et la source de son transistor pilotable.

7. Système selon l'une des revendications 3 à 5, **caractérisé en ce qu'**il comporte une résistance de tirage (R13) connectée entre le potentiel électrique de référence et à la sortie (S1) de l'unité centrale de contrôle (UC) ou à la grille du transistor de l'unité de pontage électrique de rang M.

8. Système selon l'une des revendications 1 à 7, **caractérisé en ce que** :
- L'unité centrale de contrôle (UC) comporte un composant de surveillance (2) de la tension aux bornes de chaque cellule de la pile à combustible,
- Le système comporte deux liaisons électriques de mesure destinées à relier ledit composant de surveillance (2) aux bornes de chaque cellule de la pile à combustible,
- Chaque unité de pontage électrique destinée à être associée à une cellule de la pile à combustible est connectée entre lesdites deux liaisons électriques de mesure de la cellule.

9. Système selon la revendication 8, **caractérisé en ce que** l'unité centrale de contrôle comporte un élément de commande (3) connecté sur une sortie pilotable du composant de surveillance (2).

10. Système selon la revendication 9, **caractérisé en ce que** l'élément de commande (3) comporte un premier transistor (M1) dont la grille est connectée sur la sortie pilotable du composant de surveillance (2) pour recevoir un signal de contrôle (V2) et un deuxième transistor (M2) dont la grille est connectée au drain du premier transistor (M1), ce deuxième transistor (M2) étant destiné à commander la fourniture du potentiel électrique de commande (Vp).

11. Installation électrique comprenant une pile à combustible à plusieurs cellules, **caractérisé en ce qu'**elle comporte un système de commande tel que défini dans l'une des revendications 1 à 10, chaque unité de pontage électrique (UP_j) du système étant connectée en parallèle d'au moins une cellule distincte de la pile à combustible.

12. Installation électrique selon la revendication 11, **caractérisé en ce que** chaque unité de pontage électrique est connectée en parallèle des liaisons de mesure de tension aux bornes de chaque cellule de la pile à combustible.

## Patentansprüche

1. Steuersystem, dazu bestimmt, an eine Brennstoffzelle (PAC) angepasst zu werden, wobei die Brennstoffzelle mehrere Zellen (Cell_i) aufweist, die zwischen einer ersten Klemme (B1) und einer zweiten Klemme (B2) in Reihe geschaltet sind, wobei das System aufweist:
- eine zentrale Kontrolleinheit (UC), die mindestens einen Ausgang (S1) enthält und konfiguriert ist, ein elektrisches Steuerpotential (Vp) an den Ausgang anzulegen,
- eine erste Hauptanschlussklemme (Y1), die dazu bestimmt ist, an die erste Klemme der Brennstoffzelle und an ein elektrisches Bezugspotential angeschlossen zu werden, und eine zweite Hauptanschlussklemme (Y2), die dazu bestimmt ist, an die zweite Klemme der Brennstoffzelle angeschlossen zu werden,
- eine elektronische Überbrückungsvorrichtung (D), die aufweist:
o M separate elektrische Überbrückungseinheiten (UP_j), mit M größer als oder gleich 2, wobei jede Überbrückungseinheit durch einen Rang j definiert wird, mit j von 1 bis M, wobei jede elektrische Überbrückungseinheit eine erste Anschlussklemme (Z_j_1) und eine zweite Anschlussklemme (Z_j_2), um parallel zu mindestens einer unterschiedlichen Zelle der Brennstoffzelle angeschlossen werden zu können, und eine Eingangssteuerklemme (X_j) aufweist,
o wobei die zweite Anschlussklemme (Z_j_2) der elektrischen Überbrückungseinheit des Rangs j, für j von 1 bis M-1, an die erste Anschlussklemme der elektrischen Überbrückungseinheit des Rangs j+1 angeschlossen ist,
o wobei die erste Anschlussklemme (Z_1_1) der elektrischen Überbrückungseinheit des Rangs 1 an die erste Hauptanschlussklemme (Y1) angeschlossen ist,
o wobei die zweite Anschlussklemme (Z_M_2) der elektrischen Überbrückungseinheit des Rangs M an die zweite Hauptanschlussklemme (Y2) angeschlossen ist,
o wobei jede elektrische Überbrückungseinheit konfiguriert ist, einen Anschluss oder eine Trennung zwischen ihrer ersten Anschlussklemme und ihrer zweiten Anschlussklemme zu steuern,
**dadurch gekennzeichnet, dass** :
- das System einen Kontrollschaltkreis (CC) aufweist, der eine erste Eingangsklemme (W1), die an den Ausgang (S1) der zentralen Kontrolleinheit (UC) angeschlossen ist, um das elektrische Steuerpotential (Vp) zu empfangen, und eine zweite Eingangsklemme (W2) enthält, die an die erste Hauptanschlussklemme (Y1) angeschlossen ist,
- der Kontrollschaltkreis (CC) mehrere Ausgangsklemmen (W_j) enthält, die je an die Eingangssteuerklemme (X_j) einer separaten elektrischen Überbrückungseinheit angeschlossen sind,
- der Kontrollschaltkreis (CC) konfiguriert ist, das am Eingang empfangene elektrische Steuerpotential (Vp) in mehrere separate elektrische Steuerpotentiale (V_j) zu teilen, wobei jedes erzeugte elektrische Steuerpotential (V_j) dazu bestimmt ist, an eine separate Ausgangsklemme (W_j) des Kontrollschaltkreises (CC) angelegt zu werden.

2. System nach Anspruch 1, **dadurch gekennzeichnet, dass** der Kontrollschaltkreis (CC) eine Spannungsteilerbrücke aufweist, die mindestens M in Reihe geschaltete Widerstände enthält, die untereinander die elektrischen Steuerpotentiale (V_j) definieren, wenn das elektrische Steuerpotential (Vp) an den Ausgang (S1) der zentralen Kontrolleinheit (UC) angelegt wird.

3. System nach Anspruch 1 oder 2, **dadurch gekennzeichnet, dass** jede elektrische Überbrückungseinheit (UP_j) einen steuerbaren Transistor der normalerweise geschlossenen Art aufweist.

4. System nach Anspruch 1 oder 2, **dadurch gekennzeichnet, dass** jede elektrische Überbrückungseinheit (UP_j) einen steuerbaren Transistor aufweist, ausgewählt unter:
- einem Transistor der Art MOSFET mit Verarmungskanal 'p',
- einem Transistor der Art MOSFET mit Anreicherungskanal 'n',
- einem Transistor der Art MOSFET mit Verarmungskanal 'n',
- einem Transistor der Art MOSFET mit Anreicherungskanal 'p'.

5. System nach Anspruch 3 oder 4, **dadurch gekennzeichnet, dass** jede elektrische Überbrückungseinheit (UP_j) einen Entladungswiderstand aufweist, der an den Drain oder die Source ihres steuerbaren Transistors angeschlossen ist.

6. System nach einem der Ansprüche 3 bis 5, **dadurch gekennzeichnet, dass** jede elektrische Überbrückungseinheit einen Widerstand aufweist, der zwischen dem Gate und der Source ihres steuerbaren Transistors angeschlossen ist.

7. System nach einem der Ansprüche 3 bis 5, **dadurch gekennzeichnet, dass** es einen Pullup-Widerstand (R13) aufweist, der zwischen dem elektrischen Bezugspotential und dem Ausgang (S1) der zentralen Kontrolleinheit (UC) oder an das Gate des Transistors der elektrischen Überbrückungseinheit des Rangs M angeschlossen ist.

8. System nach einem der Ansprüche 1 bis 7, **dadurch gekennzeichnet, dass** :
- die zentrale Kontrolleinheit (UC) ein Überwachungsbauteil (2) der Spannung an den Klemmen jeder Zelle der Brennstoffzelle aufweist,
- das System zwei elektrische Messverbindungen aufweist, die dazu bestimmt sind, das Überwachungsbauteil (2) mit den Klemmen jeder Zelle der Brennstoffzelle zu verbinden,
- jede elektrische Überbrückungseinheit, die dazu bestimmt ist, einer Zelle der Brennstoffzelle zugeordnet zu werden, zwischen den zwei elektrischen Messverbindungen der Zelle angeschlossen ist.

9. System nach Anspruch 8, **dadurch gekennzeichnet, dass** die zentrale Kontrolleinheit ein Steuerelement (3) aufweist, das an einen steuerbaren Ausgang des Überwachungsbauteils (2) angeschlossen ist.

10. System nach Anspruch 9, **dadurch gekennzeichnet, dass** das Steuerelement (3) einen ersten Transistor (M1), dessen Gate an den steuerbaren Ausgang des Überwachungsbauteils (2) angeschlossen ist, um ein Kontrollsignal (V2) zu empfangen, und einen zweiten Transistor (M2) aufweist, dessen Gate an den Drain des ersten Transistors (M1) angeschlossen ist, wobei dieser zweite Transistor (M2) dazu bestimmt ist, die Lieferung des elektrischen Steuerpotentials (Vp) zu steuern.

11. Elektrische Anlage, die eine Brennstoffzelle mit mehreren Zellen enthält, **dadurch gekennzeichnet, dass** sie ein wie in einem der Ansprüche 1 bis 10 definiertes Steuersystem aufweist, wobei jede elektrische Überbrückungseinheit (UP_j) des Systems mit mindestens einer separaten Zelle der Brennstoffzelle parallelgeschaltet ist.

12. Elektrische Anlage nach Anspruch 11, **dadurch gekennzeichnet, dass** jede elektrische Überbrückungseinheit mit den Spannungsmessverbindungen mit den Klemmen jeder Zelle der Brennstoffzelle parallelgeschaltet ist.

## Claims

1. Control system intended to be tailored to a fuel-cell stack (PAC), said fuel-cell stack comprising a plurality of cells (Cell_i) connected in series between a first terminal (B1) and a second terminal (B2), said system comprising:
- a central control unit (UC) comprising at least one output (S1), and configured to apply an electrical control potential (Vp) to said output,
- a first main connection terminal (Y1) intended to be connected to the first terminal of the fuel-cell stack and to a reference electrical potential, and a second main connection terminal (Y2) intended to be connected to the second terminal of the fuel-cell stack,
- an electronic bypass device (D) comprising:
o M separate electrical bypass units (UP_j), with M higher than or equal to 2, each bypass unit being defined by a rank j, with j ranging from 1 to M, each electrical bypass unit comprising a first connection terminal (Z_j_1) and a second connection terminal (Z_j_2) in order to be able to be connected in parallel to at least one separate cell of said fuel-cell stack, and an input control terminal (X_j),
o the second connection terminal (Z_j_2) of the electrical bypass unit of rank j, for j ranging from 1 to M-1, being connected to the first connection terminal of the electrical bypass unit of rank j+1,
o the first connection terminal (Z_1_1) of the electrical bypass unit of rank 1 being connected to the first main connection terminal (Y1),
o the second connection terminal (Z_M_2) of the electrical bypass unit of rank M being connected to the second main connection terminal (Y2),
o each electrical bypass unit being configured to control a connection or a disconnection between its first connection terminal and its second connection terminal,
- **characterized in that**:
- the system comprises a control circuit (CC) comprising a first input terminal (W1) connected to the output (S1) of the central control unit (UC) in order to receive said electrical control potential (Vp) and a second input terminal (W2) connected to the first main connection terminal (Y1),
- the control circuit (CC) comprising a plurality of output terminals (W_j) each connected to the input control terminal (X_j) of a separate electrical bypass unit,
- said control circuit (CC) being configured to divide the electrical control potential (Vp) received as input into a plurality of separate electrical drive potentials (V_j), each generated electrical drive potential (V_j) being intended to be applied to one separate output terminal (W_j) of the control circuit (CC).

2. System according to Claim 1, **characterized in that** the control circuit (CC) comprises a bridge voltage divider, comprising at least M resistors connected in series, defining therebetween said electrical drive potentials (V_j) when the electrical control potential (Vp) is applied to the output (S1) of the central control unit (UC).

3. System according to Claim 1 or 2, **characterized in that** each electrical bypass unit (UP_j) comprises a drivable depletion-mode transistor.

4. System according to Claim 1 or 2, **characterized in that** each electrical bypass unit (UP_j) comprises a drivable transistor chosen from:
- a depletion-mode p-channel MOSFET,
- an enhancement-mode n-channel MOSFET,
- a depletion-mode n-channel MOSFET,
- an enhancement-mode p-channel MOSFET.

5. System according to Claim 3 or 4, **characterized in that** each electrical bypass unit (UP_j) comprises a discharging resistor connected to the drain or to the source of its drivable transistor.

6. System according to one of Claims 3 to 5, **characterized in that** each electrical bypass unit comprises a resistor connected between the gate and source of its drivable transistor.

7. System according to one of Claims 3 to 5, **characterized in that** it comprises a pull-down resistor (R13) connected between the electrical reference potential and the output (S1) of the central control unit (UC) or the gate of the transistor of the electrical bypass unit of rank M.

8. System according to one of Claims 1 to 7, **characterized in that**:
- the central control unit (UC) comprises a component (2) for monitoring the voltage across the terminals of each cell of the fuel-cell stack,
- the system comprises two electrical measuring links intended to connect said monitoring component (2) to the terminals of each cell of the fuel-cell stack,
- each electrical bypass unit intended to be associated with a cell of the fuel-cell stack is connected between said two electrical measuring links of the cell.

9. System according to Claim 8, **characterized in that** the central control unit comprises a control element (3) connected to a drivable output of the monitoring component (2).

10. System according to Claim 9, **characterized in that** the control element (3) comprises a first transistor (M1) the gate of which is connected to the drivable output of the monitoring component (2) in order to receive a control signal (V2) and a second transistor (M2) the gate of which is connected to the drain of the first transistor (M1), this second transistor (M2) being intended to control the delivery of the electrical control potential (Vp).

11. Electrical apparatus comprising a fuel-cell stack comprising a plurality of cells, **characterized in that** it comprises a control system such as defined in one of Claims 1 to 10, each electrical bypass unit (UP_j) of the system being connected in parallel to at least one separate cell of the fuel-cell stack.

12. Electrical apparatus according to Claim 11, **characterized in that** each electrical bypass unit is connected in parallel with the links for measuring voltage across the terminals of each cell of the fuel-cell stack.
